# EUROPEAN PATENT APPLICATION

(11) **EP 4 692 808 A1**
(43) Date of publication of application: **11.02.2026**
(21) Application number: 24778969.6
(22) Date of filing: 27.02.2024
(51) Int. Cl.: G01N 35/10

(54) **ANALYSIS DEVICE**

(30) Priority: 31.03.2023 JP 2023058000
(71) Applicant: FUJIFILM Corporation, Tokyo 106-8620 (JP)
(72) Inventor: MIYATO, Takahiro, Ashigarakami-gun, Kanagawa 258-8538 (JP); SHIHOTA, Yuji, Ashigarakami-gun, Kanagawa 258-8538 (JP); DENAWA, Tatsuyuki, Ashigarakami-gun, Kanagawa 258-8538 (JP)
(74) Representative: Dehns Germany Partnerschaft mbB
(86) International application number: PCT/JP2024/007097
(87) International publication number: WO 2024/202828

(57) **Abstract**

An analysis apparatus includes: a dispensing nozzle that dispenses a liquid into a reaction container; a washing tank for washing the dispensing nozzle; a waste liquid tank that accommodates a waste liquid generated in the washing tank; and a waste liquid pipe line that is a separate body from the washing tank and through which the waste liquid is fed from the washing tank to the waste liquid tank, in which an opening at a first end of the waste liquid pipe line on a washing tank side has an opening diameter larger than an outer diameter of a discharge pipe for discharging the waste liquid provided in the washing tank, and the discharge pipe is inserted into the opening at the first end of the waste liquid pipe line without contacting the waste liquid pipe line, and the waste liquid tank has a waste liquid inlet that receives a second end of the waste liquid pipe line on a waste liquid tank side, and the second end of the waste liquid pipe line is inserted into the waste liquid inlet without contacting the waste liquid tank.

## Description

### BACKGROUND OF THE INVENTION

### 1. Field of the Invention

The present disclosure relates to an analysis apparatus.

### 2. Description of the Related Art

An analysis apparatus that automatically analyzes a specimen such as a biological specimen comprises a dispensing nozzle that dispenses a specimen and a reagent to react with the specimen into a reaction container is provided, in which, after dispensing the specimen or dispensing the reagent, the dispensing nozzle is moved to a washing tank, the dispensing nozzle is washed, and then another reagent is dispensed.

A washing solution used for washing in the washing tank is discarded into a waste liquid tank (for example, refer to JP1998-267939A (JP-H10-267939A)).

In the apparatus disclosed in JP1998-267939A (JP-H10-267939A), a waste liquid tank is provided directly below the washing tank, and the washing solution used for washing in the washing tank flows into the waste liquid tank through a discharge pipe formed in a bottom surface of a recess portion that accommodates the washing solution.

### SUMMARY OF THE INVENTION

In the apparatus disclosed in JP1998-267939A (JP-H10-267939A), since a waste liquid tank is required to be provided directly below the washing tank, a degree of freedom in design of an inside of the apparatus is low.

In order to increase the degree of freedom in design, it is considered to connect a flexible hose or the like to the discharge pipe of the washing tank to extend a pipe line. In general, in a case of connecting a hose or the like to the discharge pipe, a treatment is performed to prevent water leakage with an O-ring, a sealing material, or the like.

Meanwhile, an analysis apparatus that uses a measurement chip comprising a microchannel as a reaction container to a micro flow channel to carry out a series of chemical or biochemical analysis steps within the microchannel, such as mixing of a specimen and a reagent, a chemical reaction or a biochemical reaction, and detection of a product after the reaction is known. In the analysis apparatus using such a measurement chip, a reagent containing a surfactant that facilitates introduction of a specimen or a reagent into the microchannel may be dispensed into the measurement chip. In the apparatus that uses a reagent containing a surfactant that facilitates introduction of a reagent or the like into such a microchannel, the surfactant is contained in a washing solution after washing a dispensing nozzle. It has been found that, in a case where a waste liquid composed of a washing solution containing such a surfactant is discarded into a waste liquid tank through a pipe line made up of a plurality of members and using an O-ring, a sealing material, or the like at a connecting portion, the waste liquid tends to leak out from the connecting portion. Since the waste liquid also contains a specimen, the leakage of the waste liquid leads to contamination inside and outside the apparatus.

An object of the present disclosure is to provide an analysis apparatus that can improve a degree of freedom in design of the apparatus and can suppress occurrence of contamination due to leakage of a waste liquid.

According to the present disclosure, there is provided an analysis apparatus comprising: a dispensing nozzle that dispenses a liquid into a reaction container; a washing tank for washing the dispensing nozzle; a waste liquid tank that accommodates a waste liquid generated in the washing tank; and a waste liquid pipe line that is a separate body from the washing tank and through which the waste liquid is fed from the washing tank to the waste liquid tank, in which an opening at a first end of the waste liquid pipe line on a washing tank side has an opening diameter larger than an outer diameter of a discharge pipe for discharging the waste liquid provided in the washing tank, and the discharge pipe is inserted into the opening at the first end of the waste liquid pipe line without contacting the waste liquid pipe line, and the waste liquid tank has a waste liquid inlet that receives a second end of the waste liquid pipe line on a waste liquid tank side, and the second end of the waste liquid pipe line is inserted into the waste liquid inlet without contacting the waste liquid tank.

It is preferable that, in a case where the waste liquid pipe line is composed of a plurality of pipe lines, a downstream end of a pipe line on an upstream side is inserted into an opening at an upstream end of a pipe line on a downstream side in a state where the pipe lines do not come into contact with each other, in a connecting portion between the pipe lines.

It is preferable that the waste liquid pipe line has a monotonically downward inclination from the first end on the washing tank side toward the second end on the waste liquid tank side.

It is preferable that at least a part of the waste liquid pipe line is configured such that an inclined angle is changeable from the downward inclination to an upward inclination.

It is preferable that, in a case where at least a part of the waste liquid pipe line is configured such that an inclined angle is changeable from the downward inclination to an upward inclination, a portion of the waste liquid pipe line including the second end on the waste liquid tank side is configured such that the inclined angle is changeable.

The portion of the waste liquid pipe line including the second end may be rotatably installed about a fixed fulcrum, and, in a case where the portion rotates about the fulcrum, a vertical position of the second end may be displaced in an up-down direction to change the inclined angle.

It is preferable that the washing tank is detachable from the waste liquid pipe line.

According to the technology of the present disclosure, it is possible to provide an analysis apparatus that can improve a degree of freedom in design of the apparatus and can suppress occurrence of contamination due to leakage of a waste liquid.

### BRIEF DESCRIPTION OF THE DRAWINGS

FIG. 1 is a schematic diagram showing an overall configuration of an analysis apparatus according to an embodiment.
FIG. 2 is a perspective view of a waste liquid treatment mechanism.
FIG. 3 is a cross-sectional view of the waste liquid treatment mechanism.
FIG. 4 is an enlarged view of a connecting portion A indicated by a broken line A in FIG. 2.
FIG. 5 is an enlarged view of a connecting portion B indicated by a broken line B in FIG. 2.
FIG. 6 is an enlarged view of a connecting portion C indicated by a broken line C in FIG. 2.
FIG. 7 is a diagram schematically showing a state of a connecting portion.
FIG. 8 is a diagram showing a state in which a part of a waste liquid pipe line is inclined upward.
FIG. 9 is a diagram showing a state in which a second end of the waste liquid pipe line is pressed down by a pressing protrusion on a front door.

### DESCRIPTION OF THE PREFERRED EMBODIMENTS

Hereinafter, an analysis apparatus according to an embodiment of the present disclosure will be described with reference to the drawings. Constituent elements indicated by the same reference numerals in the drawings mean the same constituent elements. Unless otherwise specified in the specification, each constituent element is not limited to one, and each constituent element may be plural.

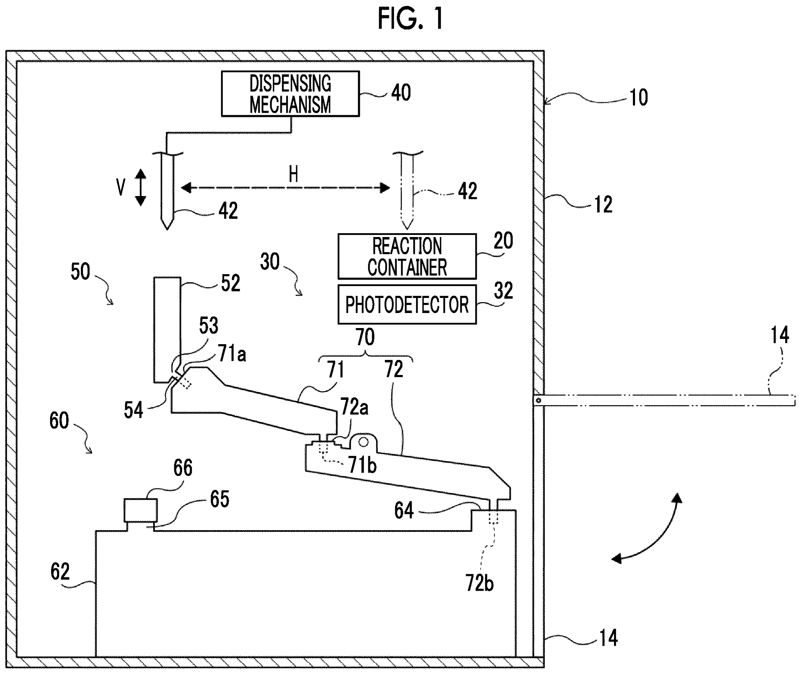

FIG. 1 is a schematic diagram showing an overall configuration of an analysis apparatus 10 according to an embodiment of the present disclosure. The analysis apparatus 10 is an apparatus that is loaded with a reaction container 20 comprising a microchannel, and that optically detects a substance to be detected in a specimen dispensed into the reaction container 20. The analysis apparatus 10 of the present embodiment performs, for example, a process of imparting a fluorescent label to a substance to be detected in a specimen in the reaction container 20, and detects fluorescence from the fluorescent label to analyze the presence or absence or the amount of the substance to be detected.

The analysis apparatus 10 comprises a detection processing section 30, a dispensing mechanism 40, a washing section 50, and a waste liquid treatment mechanism 60 in a housing 12.

The reaction container 20 is loaded into the detection processing section 30. In this example, the reaction container 20 is a microchannel chip comprising a microchannel. In the detection processing section 30, the dispensing mechanism 40 dispenses a specimen and a reagent into the reaction container 20. Then, the specimen and the reagent react with each other in the reaction container 20, and a fluorescent label is imparted to the substance to be detected in the specimen. The detection processing section 30 comprises a photodetector 32, and the photodetector 32 detects fluorescence from the fluorescent label imparted to the substance to be detected in the reaction container 20.

The analysis apparatus 10 further comprises a reagent reservoir (not shown) that stores the reagent dispensed into the reaction container 20 and a housing part that houses a specimen collection tube containing the specimen.

The dispensing mechanism 40 comprises a dispensing nozzle 42 that dispenses a liquid, such as a specimen and a reagent, into the reaction container 20. The dispensing mechanism 40 uses the dispensing nozzle 42 to suction the specimen from the specimen collection tube and dispense it into the reaction container 20, or to suction the reagent from the reagent reservoir and dispense it into the reaction container 20. Although only one dispensing nozzle 42 is described in FIG. 1, a plurality of dispensing nozzles 42 may be provided. The dispensing mechanism 40 comprises a moving unit (not shown) that moves the dispensing nozzle 42 in a horizontal direction H indicated by a broken line double-headed arrow and in vertical up-down direction V indicated by a solid line double-headed arrow in FIG. 1.

The washing section 50 comprises a washing tank 52 for washing the dispensing nozzle 42 and a washing solution tank (not shown) for storing a washing solution. The washing tank 52 is a water tank for washing the dispensing nozzle 42. The dispensing mechanism 40 moves the dispensing nozzle 42, which has dispensed the specimen or the reagent, to the washing section 50 and inserts the dispensing nozzle 42 into the washing tank 52. The washing solution is supplied to the washing tank 52 from the washing solution tank to wash the dispensing nozzle 42.

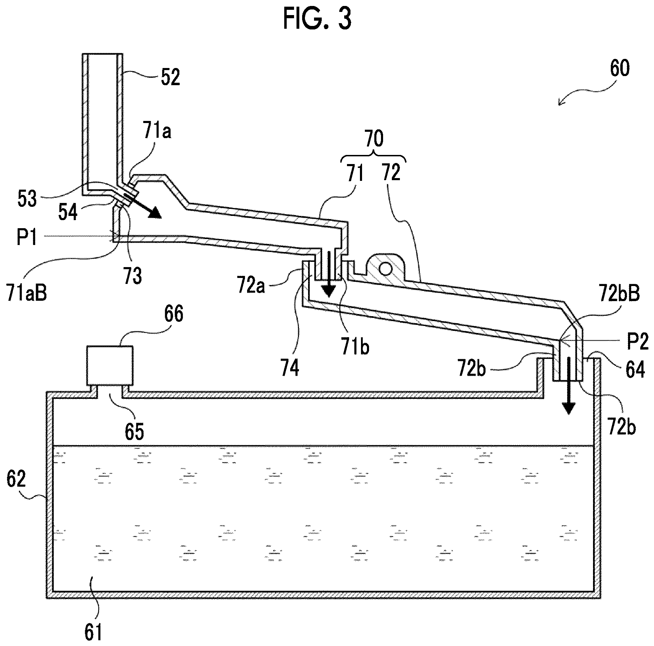

The washing tank 52 comprises a discharge pipe 54 for discharging a waste liquid 61 (see FIG. 3) from the inside of the washing tank 52. The discharge pipe 54 communicates with an opening 53 provided in a part of a bottom surface of the washing tank 52, and the waste liquid 61 in the washing tank 52 is discharged to the outside of the washing tank 52 through the discharge pipe 54.

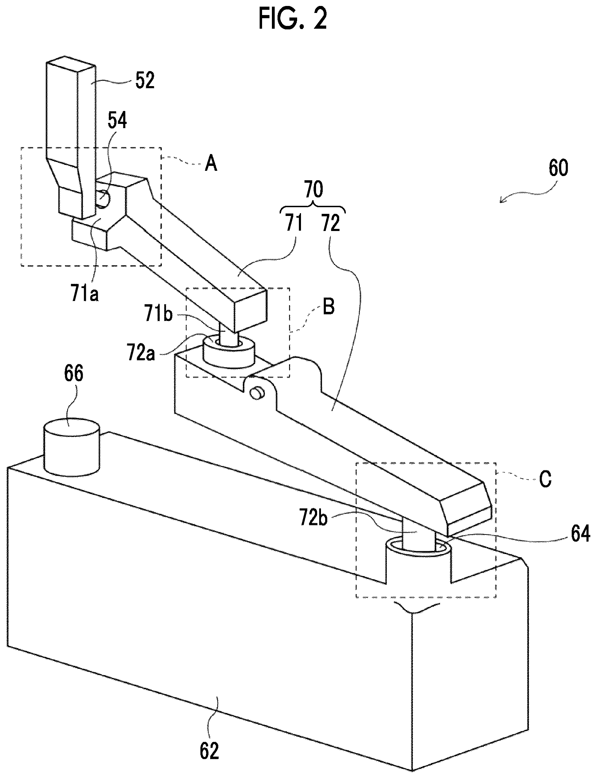

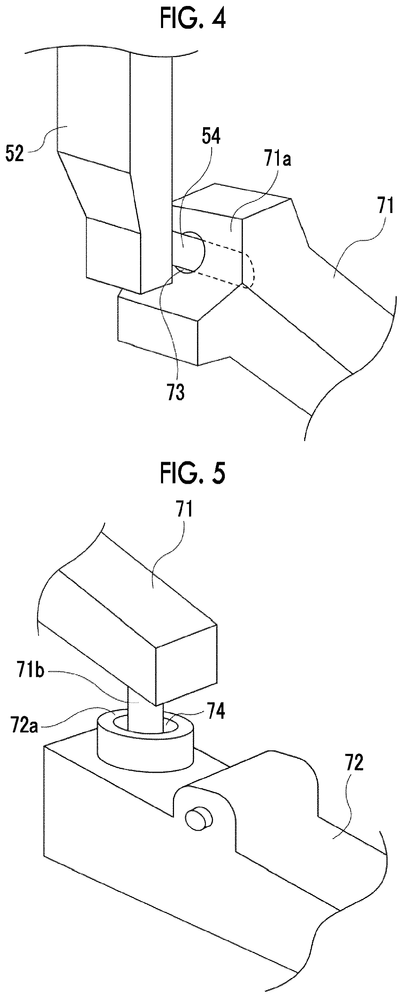

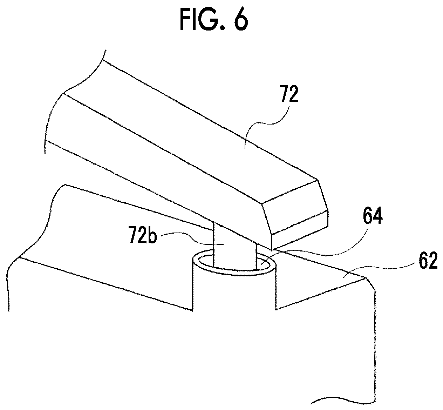

The waste liquid treatment mechanism 60 comprises a waste liquid tank 62 and a waste liquid pipe line 70. FIG. 2 is a perspective view showing a specific configuration of the waste liquid treatment mechanism 60. FIG. 3 is a schematic cross-sectional view of the waste liquid treatment mechanism 60 shown in FIG. 2. FIG. 4 is an enlarged view of a portion surrounded by a broken line A in FIG. 2, FIG. 5 is an enlarged view of a portion surrounded by a broken line B in FIG. 2, and FIG. 6 is an enlarged view of a portion surrounded by a broken line C in FIG. 2.

The waste liquid tank 62 stores the waste liquid 61 generated in the washing tank 52. The housing 12 comprises a door 14 for inserting and removing a waste liquid tank. In this example, the door 14 is an upward opening door in which a lower end is lifted upward. The door 14 can be opened and closed by a user. In a case where the waste liquid 61 is accumulated in the waste liquid tank 62, the user opens the door 14, takes out the waste liquid tank 62 to the outside of the analysis apparatus 10, discards the waste liquid 61, and places the emptied waste liquid tank 62 inside the analysis apparatus 10. The waste liquid tank 62 comprises a waste liquid inlet 64 into which the waste liquid 61 from the washing tank 52 is introduced via the waste liquid pipe line 70, an air hole 65, and a vent cap 66 attached to the air hole 65.

The waste liquid pipe line 70 is a flow channel through which the waste liquid 61 generated in the washing tank 52 is fed to the waste liquid tank 62. The most upstream position in a path (hereinafter, a waste liquid path) through which the waste liquid 61 flows is the washing tank 52, and the most downstream position is the waste liquid tank 62. The discharge pipe 54 of the washing tank 52 is connected to a first end 71a on the washing tank 52 side, which is an upstream end of the waste liquid pipe line 70. A second end 72b on the waste liquid tank 62 side, which is a downstream end of the waste liquid pipe line 70, is connected to the waste liquid inlet 64 of the waste liquid tank 62.

The waste liquid pipe line 70 has a monotonically downward inclination from the first end 71a on the washing tank 52 side toward the second end 72b on the waste liquid tank 62 side. Here, the expression "the waste liquid pipe line 70 is inclined downward" means that the waste liquid pipe line 70 is inclined with respect to a horizontal direction such that a vertical position P1 of a bottom 71aB in the pipe line at the first end 71a is higher than a vertical position P2 of a bottom 72bB in the pipe line at the second end 72b. The expression "monotonically downward inclination" means a state where there is no portion where a vertical position of an inner bottom surface of the waste liquid pipe line 70 rises from the first end 71a side toward the second end 72b. In a case where the waste liquid pipe line 70 has a monotonically downward inclination, the waste liquid 61 is fed through the waste liquid pipe line 70 by its own weight. Conversely, in a case where the waste liquid 61 is fed through the waste liquid pipe line 70 by its own weight, the waste liquid pipe line 70 can be regarded as having a monotonically downward inclination.

In this example, the waste liquid pipe line 70 is composed of a first pipe line 71 and a second pipe line 72. In this example, the first end 71a of the waste liquid pipe line 70 on the washing tank 52 side is an upstream end of the first pipe line 71, and the second end 72b of the waste liquid pipe line 70 on the waste liquid tank 62 side is a downstream end of the second pipe line 72. Hereinafter, the first end 71a may be referred to as an upstream end 71a of the first pipe line 71, and the second end 72b may be referred to as a downstream end 72b of the second pipe line 72.

FIG. 4 is an enlarged view of a portion indicated by the broken line A in FIG. 2, and shows a connecting portion (hereinafter, referred to as a connecting portion A) between the discharge pipe 54 of the washing tank 52 and the waste liquid pipe line 70 (specifically, the first pipe line 71). As shown in FIG. 4, an opening 73 at the upstream end 71a of the first pipe line 71 has an opening diameter larger than an outer diameter of the discharge pipe 54 provided in the washing tank 52. Then, the discharge pipe 54 is inserted into the opening 73 of the first end 71a of the waste liquid pipe line 70 without contacting the waste liquid pipe line 70 (specifically, the first pipe line 71). In this example, the discharge pipe 54 extends in an inclined manner with respect to the vertically downward direction from the washing tank 52, and the opening 73 at the upstream end 71a of the first pipe line 71, which receives the discharge pipe 54 extending in an inclined manner, is provided on an inclined surface of the first pipe line 71.

FIG. 5 is an enlarged view of a portion indicated by the broken line B in FIG. 2 and shows a connecting portion (hereinafter, referred to as a connecting portion B) between the first pipe line 71 and the second pipe line 72. As shown in FIG. 5, an opening 74 at an upstream end 72a of the second pipe line 72 has an opening diameter larger than an outer diameter of a downstream end 71b of the first pipe line 71. Then, the downstream end 71b of the first pipe line 71 is inserted into the opening 74 at the upstream end 72a of the second pipe line 72 without contacting the second pipe line 72. In this example, the downstream end 71b of the first pipe line 71 extends vertically downward at a downstream end part of the first pipe line, and the opening 74 at the upstream end 72a of the second pipe line 72, which receives the downstream end 71b of the first pipe line 71, is provided in a plane substantially parallel to a horizontal plane.

FIG. 6 is an enlarged view of a portion indicated by the broken line C in FIG. 2, and is an enlarged view of a connection portion (hereinafter, referred to as a connection portion C) between the waste liquid pipe line 70 (specifically, the second pipe line 72) and the waste liquid tank 62. As shown in FIG. 6, the waste liquid inlet 64 of the waste liquid tank 62 receives the downstream end 72b of the second pipe line 72. The second end 72b (here, the downstream end of the second pipe line 72) of the waste liquid pipe line 70 is inserted into the waste liquid inlet 64 without contacting the waste liquid tank 62. That is, an opening diameter of the waste liquid inlet 64 is configured to be larger than an outer diameter of the downstream end 72b of the second pipe line 72.

In the connection portions A to C in the waste liquid path leading from the washing tank 52 to the waste liquid tank 62 of the waste liquid treatment mechanism 60, components constituting the waste liquid path are connected to each other. Of two components connected at each of the connecting portions A to C, a component located relatively upstream is referred to as an upstream component 101, and a component located relatively downstream is referred to as a downstream component 102.

In a case of the connecting portion A, the discharge pipe 54 of the washing tank 52 corresponds to the upstream component 101, and the first pipe line 71 corresponds to the downstream component 102. In a case of the connecting portion B, the first pipe line 71 corresponds to the upstream component 101, and the second pipe line 72 corresponds to the downstream component 102. In addition, in the case of the connecting portion C, the second pipe line 72 corresponds to the upstream component 101, and the waste liquid tank 62 corresponds to the downstream component 102.

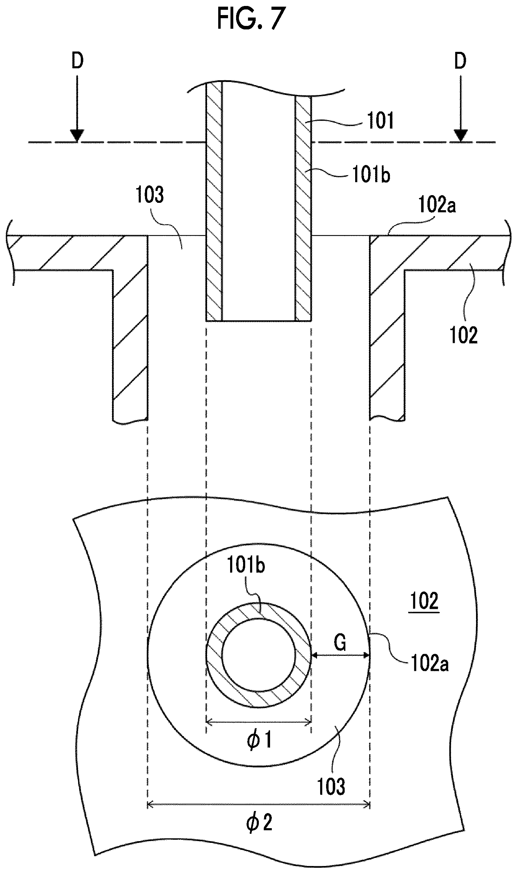

FIG. 7 shows a positional relationship between the upstream component 101 and the downstream component 102. An upper diagram in FIG. 7 is a cross-sectional view of a connecting portion between the upstream component 101 and the downstream component 102, and a lower diagram is a cross-sectional view taken along a line D-D.

As already described for the respective components in the connecting portions A to C with reference to FIGS. 4 to 6, an opening diameter φ2 of an opening 103 at an upstream end 102a of the downstream component 102 is larger than an outer diameter φ1 of a downstream end 101b of the upstream component 101. Then, the downstream end 101b of the upstream component 101 is inserted into the opening 103 at the upstream end 102a of the downstream component 102 without contacting the downstream component 102.

An interval G between an outer periphery of the downstream end 101b of the upstream component 101 and the opening 103 of the downstream component 102 is, for example, about 1 mm to several mm. In a case where φ1 + 2 mm ≤ φ2, the interval G can be set to 1 mm or more.

The analysis apparatus 10 has the above-described configuration.

As described above, the analysis apparatus 10 of the present embodiment comprises the dispensing nozzle 42 that dispenses the liquid into the reaction container 20, the washing tank 52 for washing the dispensing nozzle 42, the waste liquid tank 62 that accommodates the waste liquid, and the waste liquid pipe line 70 through which the waste liquid is fed from the washing tank 52 to the waste liquid tank 62. By providing the waste liquid pipe line 70, a degree of freedom in design of the apparatus can be improved as compared with a case where the waste liquid is directly discharged to the waste liquid tank 62 from the discharge pipe 54 that is integrally provided in the washing tank 52.

As described above, in order to introduce a reagent into the microchannel of the reaction container 20 having the microchannel, the reagent may contain a surfactant for facilitating introduction of a liquid into the microchannel. In a case where the waste liquid contains such a surfactant and in a case where the connecting portions between the components in the waste liquid path are formed by bringing the components into contact with each other using seals such as O-rings or fittings such as barbed joints, a problem occurs in which the liquid leaks out from the connecting portions due to a capillary phenomenon. In the analysis apparatus 10 of the present embodiment, the opening 73 at the first end 71a of the waste liquid pipe line 70 on the washing tank 52 side has an opening diameter larger than the outer diameter of the discharge pipe 54 for discharging the waste liquid 61 provided in the washing tank 52. Then, the discharge pipe 54 is inserted into the opening 73 at the first end 71a of the waste liquid pipe line 70 without contacting the waste liquid pipe line 70. In addition, the waste liquid tank 62 has the waste liquid inlet 64 that receives the second end 72b of the waste liquid pipe line 70 on the waste liquid tank 62 side. Then, the second end 72b of the waste liquid pipe line 70 is inserted into the waste liquid inlet 64 without contacting the waste liquid tank 62. In this manner, in the analysis apparatus 10 of the present embodiment, the waste liquid path is configured such that the discharge pipe 54 of the washing tank 52 and the waste liquid pipe line 70 do not come into contact with each other, and the waste liquid pipe line 70 and the waste liquid tank 62 do not come into contact with each other at the respective connecting portions therebetween, thereby suppressing the occurrence of the capillary phenomenon and the leakage of the waste liquid, and thereby suppressing the occurrence of contamination associated with the leakage of the waste liquid.

In addition, in the analysis apparatus 10 of the present embodiment, the waste liquid pipe line 70 is composed of a plurality of pipe lines (here, the first pipe line 71 and the second pipe line 72). In this case, as in the present embodiment, in the connecting portion B between the first pipe line 71 and the second pipe line 72, in a case where the downstream end 71b of the first pipe line 71 on the upstream side is inserted into the opening 74 at the upstream end 72a of the second pipe line 72 on the downstream side in a state where the first pipe line 71 and the second pipe line 72 do not come into contact with each other, the leakage of the waste liquid 61 from the connecting portion B can be suppressed, and the occurrence of contamination can be suppressed.

In the analysis apparatus 10 of the present embodiment, the waste liquid pipe line 70 is composed of two independent pipe lines 71 and 72, but the waste liquid pipe line 70 may be composed of a single pipe line or may be composed of three or more independent pipe lines. It is preferable that, in a case where the waste liquid pipe line 70 is composed of three or more pipe lines, a downstream end of a pipe line on an upstream side is inserted into an opening at an upstream end of a pipe line on a downstream side in a state where the pipe lines do not come into contact with each other, at any connecting portion between the pipe lines.

In a case where the interval G between an outer periphery of the upstream component 101 and an inner periphery of the opening 103 of the downstream component 102, that is, an interval between an outer periphery of the discharge pipe 54 and the opening 73 at the first end 71a of the waste liquid pipe line 70, and an interval between an outer periphery of the second end 72b of the waste liquid pipe line 70 and an inner periphery of the waste liquid inlet 64 of the waste liquid tank 62 are 1 mm or more, the occurrence of the capillary phenomenon can be more reliably suppressed, and the effect of suppressing the leakage of the waste liquid can be further enhanced. Similarly, in a case where the waste liquid pipe line 70 is composed of a plurality of pipe lines, the occurrence of the capillary phenomenon can be more reliably suppressed, and the effect of suppressing the leakage of the waste liquid 61 can be further enhanced as long as the interval between the outer periphery of the pipe line on the upstream side and the inner periphery of the opening of the pipe line on the downstream side is 1 mm or more.

In the present embodiment, the waste liquid pipe line 70 has a monotonically downward inclination from the first end 71a on the washing tank 52 side toward the second end 72b on the waste liquid tank 62 side. With this configuration, the waste liquid 61 is fed through the waste liquid pipe line 70 by its own weight, so that a liquid feeding mechanism such as a pump for feeding the liquid is not necessary.

It is preferable that the washing tank 52 is configured to be detachable from the waste liquid pipe line 70. In a case where the washing tank 52 is detachable from the waste liquid pipe line 70, the washing tank 52 can be detached during maintenance, and the washing tank 52 can be cleaned.

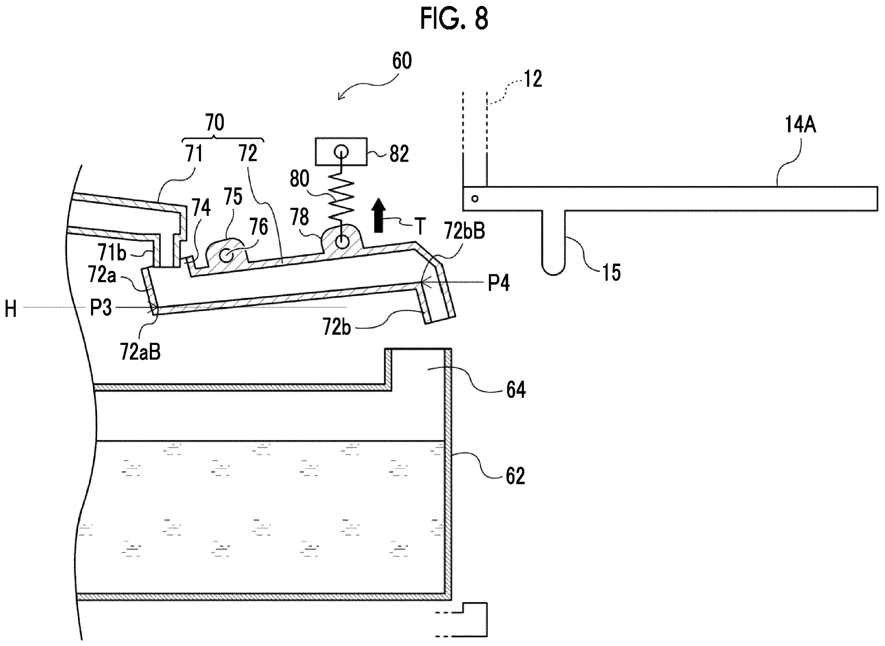

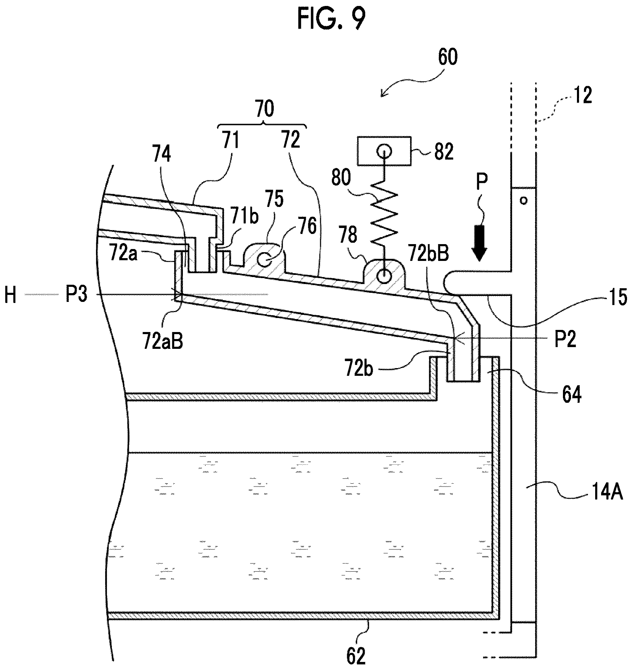

Further, it is preferable that at least a part of the waste liquid pipe line 70 is configured such that an inclined angle is changeable from the downward inclination to an upward inclination (see FIGS. 8 and 9). Here, the expression "the pipe line is inclined upward" means that the pipe line is inclined with respect to the horizontal direction such that a vertical position of a bottom of the pipe line on an upstream side is lower than a vertical position of a downstream end.

FIG. 8 shows a state in which a portion including the second end 72b of the waste liquid pipe line 70, that is, the second pipe line 72 is inclined upward, and FIG. 9 shows a state in which the second pipe line 72 is inclined downward.

As described above, it is preferable that the waste liquid pipe line 70 is inclined downward such that the waste liquid 61 flows into the waste liquid tank 62 by its own weight. On the other hand, in a case where the waste liquid tank 62 is inserted into or removed from the analysis apparatus 10, it is preferable to change at least a part of the waste liquid pipe line 70 to the upward inclination. This is because, in a case where the user takes out the waste liquid tank 62 to the outside of the analysis apparatus 10, the dripping of the waste liquid 61 from the second end 72b can be stopped by changing the inclined angle of a part of the waste liquid pipe line 70 from the downward inclination to the upward inclination.

The insertion and removal of the waste liquid tank 62 are usually performed in a state where the discharge of the waste liquid 61 from the washing tank 52 is stopped. However, even in a case where the discharge of the waste liquid 61 from the washing tank 52 has stopped, the waste liquid 61 remaining inside the waste liquid pipe line 70 may gradually flow downstream and drip from the second end 72b. By changing a part of the waste liquid pipe line 70 from the downward inclination to the upward inclination, the flow of the waste liquid 61 at least downstream of that part can be stopped, thereby suppressing dripping of the liquid from the second end 72b.

Even in a case where any portion of the waste liquid pipe line 70 is configured to be changeable from the downward inclination to the upward inclination, the effect of suppressing the dripping of the liquid from the second end 72b can be obtained. Note that, as in this example, in a case where the portion (in this example, the second pipe line 72) including the second end 72b can be inclined upward, the dripping of the liquid from the second end 72b can be more reliably suppressed.

In the example of FIG. 8, the second pipe line 72 comprises a fixing protrusion 75 on its portion. A shaft 76 is inserted into a through-hole provided in the fixing protrusion 75, and the inserted shaft 76 is fixed to the housing 12 or a frame in the housing 12. The second pipe line 72 of the waste liquid pipe line 70 is installed to be rotatable about the shaft 76 as a rotation fulcrum. In a case where the second pipe line 72 rotates about the fulcrum, the vertical position of the second end 72b is displaced in the up-down direction to change the inclined angle. With this configuration, the second pipe line 72 can be switched from the downward inclination to the upward inclination or from the upward inclination to the downward inclination while saving space.

In this example, the rotation fulcrum of the second pipe line 72 is set upstream of the center of the second pipe line 72 in a length direction. The second pipe line 72 comprises a spring connecting protrusion 78 for connecting a tension spring 80 to the second pipe line 72 by fixing one end of the tension spring 80 to an upper portion on the downstream end 72b side. The other end of the tension spring 80 is fixed to the housing 12 or the frame in the housing 12 by a fixing portion 82. A tensile force T is applied vertically upward to the spring connecting protrusion 78 of the second pipe line 72 by the tension spring 80. The downstream end 72b of the second pipe line 72 is pulled upward by the tension force T of the tension spring 80. In this case, the second pipe line 72 rotates about the fulcrum, and the downstream end 72b is displaced upward, so that the downstream end 72b is pulled out of the waste liquid inlet 64 of the waste liquid tank 62 as shown in FIG. 8. In this manner, as the downstream end 72b of the second pipe line 72 is pulled by the tension spring 80, the second pipe line 72 rotates about the fulcrum and the downstream end 72b is pulled vertically upward, so that a vertical position P4 of the bottom 72bB in the pipe line at the downstream end 72b is higher than a vertical position P3 of a bottom 72aB in the pipe line at the upstream end 72a, resulting in the upward inclination. That is, in FIG. 8, the second pipe line 72 is inclined such that the bottom 72bB of the downstream end 72b is positioned above an axis H parallel to the horizontal direction, which is indicated with the bottom 72aB of the upstream end 72a as a reference. In order to incline the second pipe line 72 downward, a structure that applies a pressing force for pressing down the second end 72b against the tensile force T of the tension spring 80 or a structure that pulls the second end 72b vertically downward with a tensile force larger than the tensile force T of the tension spring 80 need only be provided.

In the examples of FIGS. 8 and 9, as a structure that applies the pressing force P for pressing down the second end 72b against the tensile force T of the tension spring 80, a door 14A comprises a pressing protrusion 15 on a surface of the housing 12 inside, which presses down the second end 72b of the second pipe line 72.

As shown in FIG. 8, in a case where the door 14A is opened, the pressing protrusion 15 is separated from the second pipe line 72, and thus the pressing force P is not applied to the second pipe line 72. Therefore, the second pipe line 72 is pulled by the tension spring 80 and is inclined upward. On the other hand, as shown in FIG. 9, in a case where the door 14A is closed, the pressing protrusion 15 presses down the downstream end 72b of the second pipe line 72 from above. The downstream end 72b of the second pipe line 72 is pressed down by the pressing force P, the downstream end 72b is inserted into the waste liquid inlet 64 of the waste liquid tank 62, and the second pipe line 72 is inclined downward. That is, in FIG. 9, the second pipe line 72 is inclined such that the bottom 72bB in the pipe line at the downstream end 72b is positioned below an axis H parallel to the horizontal direction, which is indicated with the bottom 72aB of the upstream end 72a as a reference.

In this manner, by providing the tension spring 80 and the pressing protrusion 15 on the door 14A, the second pipe line 72 can be switched between the upward inclination and the downward inclination by opening and closing the door 14A. In a case where the user takes out the waste liquid tank 62, the second end 72b of the waste liquid pipe line 70 is lifted by the tension spring by opening the door 14A. Therefore, the user does not need to pull out the second end 72b from the waste liquid inlet 64 of the waste liquid tank 62. In addition, since the second end 72b is inserted into the waste liquid inlet 64 by closing the door 14A, the user does not need to insert the second end 72b into the waste liquid inlet 64 of the waste liquid tank 62. Therefore, it is possible to significantly reduce the time and effort required for inserting and removing the waste liquid tank 62.

In the above-described embodiment, an aspect in which the detection processing section 30 of the analysis apparatus 10 performs fluorescence detection has been described, but the analysis apparatus of the present disclosure is not limited to fluorescence detection; any method may be employed to detect the substance to be detected in the specimen.

The waste liquid tank 62 may be configured to accommodate not only the waste liquid from the washing tank 52 but also the waste liquid discharged from the reagent reservoir or the like. For example, a reagent reservoir drain that discharges the waste liquid generated in the reagent reservoir from the reagent reservoir may be connected to a part of the waste liquid pipe line 70, and the waste liquid generated in the reagent reservoir may be fed to the waste liquid tank 62 via the waste liquid pipe line 70.

The following appendices are further disclosed with respect to the above embodiment.

### (Appendix 1)

An analysis apparatus comprising:
a dispensing nozzle that dispenses a liquid into a reaction container;
a washing tank for washing the dispensing nozzle;
a waste liquid tank that accommodates a waste liquid generated in the washing tank; and
a waste liquid pipe line that is a separate body from the washing tank and through which the waste liquid is fed from the washing tank to the waste liquid tank,
wherein an opening at a first end of the waste liquid pipe line on a washing tank side has an opening diameter larger than an outer diameter of a discharge pipe for discharging the waste liquid provided in the washing tank, and the discharge pipe is inserted into the opening at the first end of the waste liquid pipe line without contacting the waste liquid pipe line, and
the waste liquid tank has a waste liquid inlet that receives a second end of the waste liquid pipe line on a waste liquid tank side, and the second end of the waste liquid pipe line is inserted into the waste liquid inlet without contacting the waste liquid tank.

### (Appendix 2)

The analysis apparatus according to Appendix 1,
in which the waste liquid pipe line is composed of a plurality of pipe lines, and, in a connecting portion between the pipe lines, a downstream end of a pipe line on an upstream side is inserted into an opening at an upstream end of a pipe line on a downstream side in a state where the pipe lines do not come into contact with each other.

### (Appendix 3)

The analysis apparatus according to Appendix 1 or 2,
in which the waste liquid pipe line has a monotonically downward inclination from the first end on the washing tank side toward the second end on the waste liquid tank side.

### (Appendix 4)

The analysis apparatus according to Appendix 3,
in which at least a part of the waste liquid pipe line is configured such that an inclined angle is changeable from the downward inclination to an upward inclination.

### (Appendix 5)

The analysis apparatus according to Appendix 4,
in which a portion of the waste liquid pipe line including the second end on the waste liquid tank side is configured such that the inclined angle is changeable.

### (Appendix 6)

The analysis apparatus according to Appendix 5,
in which the portion of the waste liquid pipe line including the second end is rotatably installed about a fixed fulcrum, and, in a case where the portion rotates about the fulcrum, a vertical position of the second end is displaced in an up-down direction to change the inclined angle.

### (Appendix 7)

The analysis apparatus according to any one of Appendices 1 to 6,
in which the washing tank is detachable from the waste liquid pipe line.

The disclosure of Japanese Patent Application No. 2023-058000 filed on March 31, 2023 is incorporated in the present specification by reference. All documents, patent applications, and technical standards mentioned in the present specification are incorporated herein by reference to the same extent as in a case in which each document, each patent application, and each technical standard are specifically and individually described by being incorporated by reference.

### Explanation of References

10: analysis apparatus
12: housing
14, 14A: door
15: pressing protrusion
20: reaction container
30: detection processing section
32: photodetector
40: dispensing mechanism
42: dispensing nozzle
50: washing section
52: washing tank
53: opening
54: discharge pipe
60: waste liquid treatment mechanism
61: waste liquid
62: waste liquid tank
64: waste liquid inlet
65: air hole
66: vent cap
70: waste liquid pipe line
71: first pipe line
71a: first end (upstream end of first pipe line)
71aB: bottom in pipe line at first end (upstream end of first pipe line)
71b: downstream end of first pipe line
72: second pipe line
72a: upstream end of second pipe line
72aB: bottom in pipe line at upstream end of second pipe line
72b: second end (downstream end of second pipe line)
72bB: bottom in pipe line at second end (downstream end of second pipe line)
73: opening at first end (opening at upstream end of first pipe line)
74: opening at upstream end of second pipe line
75: fixing protrusion
76: shaft
78: spring connecting protrusion
80: tension spring
82: fixing portion
101: upstream component
101b: downstream end of upstream component
102: downstream component
102a: upstream end of downstream component
103: opening at upstream end of downstream component

## Claims

1. An analysis apparatus comprising:
a dispensing nozzle that dispenses a liquid into a reaction container;
a washing tank for washing the dispensing nozzle;
a waste liquid tank that accommodates a waste liquid generated in the washing tank; and
a waste liquid pipe line that is a separate body from the washing tank and through which the waste liquid is fed from the washing tank to the waste liquid tank,
wherein an opening at a first end of the waste liquid pipe line on a washing tank side has an opening diameter larger than an outer diameter of a discharge pipe for discharging the waste liquid provided in the washing tank, and the discharge pipe is inserted into the opening at the first end of the waste liquid pipe line without contacting the waste liquid pipe line, and
the waste liquid tank has a waste liquid inlet that receives a second end of the waste liquid pipe line on a waste liquid tank side, and the second end of the waste liquid pipe line is inserted into the waste liquid inlet without contacting the waste liquid tank.

2. The analysis apparatus according to claim 1,
wherein the waste liquid pipe line is composed of a plurality of pipe lines, and, in a connecting portion between the pipe lines, a downstream end of a pipe line on an upstream side is inserted into an opening at an upstream end of a pipe line on a downstream side in a state where the pipe lines do not come into contact with each other.

3. The analysis apparatus according to claim 1 or 2,
wherein the waste liquid pipe line has a monotonically downward inclination from the first end on the washing tank side toward the second end on the waste liquid tank side.

4. The analysis apparatus according to claim 3,
wherein at least a part of the waste liquid pipe line is configured such that an inclined angle is changeable from the downward inclination to an upward inclination.

5. The analysis apparatus according to claim 4,
wherein a portion of the waste liquid pipe line including the second end on the waste liquid tank side is configured such that the inclined angle is changeable.

6. The analysis apparatus according to claim 5,
wherein the portion of the waste liquid pipe line including the second end is rotatably installed about a fixed fulcrum, and, in a case where the portion rotates about the fulcrum, a vertical position of the second end is displaced in an up-down direction to change the inclined angle.

7. The analysis apparatus according to claim 1 or 2,
wherein the washing tank is detachable from the waste liquid pipe line.
